# DEMANDE DE BREVET EUROPEEN

(11) **EP 3 222 501 A1**
(43) Date de publication de la demande: **27.09.2017**
(21) Numéro de dépôt: 17161980.2
(22) Date de dépôt: 21.03.2017
(51) Int. Cl.: B62H 3/00, B62H 5/00, E04H 6/00, G07F 17/10

(54) **INSTALLATION ET SON PROCÉDÉ D'INSTALLATION D'UN POSTE DE VERROUILLAGE DANS UN SYSTÈME DE STOCKAGE D'UN CYCLE**

(30) Priorité: 24.03.2016 FR 1652581
(71) Demandeur: Tracetel S.A., 78320 La Verrière (FR)
(72) Inventeur: BENAMARA, Raouf, 78610 LE PERRAY EN YVELINES (FR); EMERY, Jean, 78470 SAINT REMY LES CHEVREUSE (FR)
(74) Mandataire: Debay, Yves

(57) **Abrégé**

La présente invention concerne une installation (1) d'au moins un poste de verrouillage (2) d'un élément de verrouillage fixé sur un cycle, à un connecter à un système électronique de gestion et de stockage de cycles. Le poste de verrouillage comprend une platine de verrouillage (3) composée d'une glissière de verrouillage (5) et d'un ensemble électronique, et un piétement (4) séparé d'un habillage (10, 11) et d'un support de ces éléments. Le support de piétement comprend un support de sol (7) constitué d'une platine de sol (8) fixée sur au moins deux tubes longitudinaux (7a, 7b). Le piétement, qui est monté solidaire de la platine de verrouillage, est également fixé à la platine de sol du support de sol.

## Description

### DOMAINE TECHNIQUE DE L'INVENTION

La présente invention concerne le domaine des bornes de verrouillage d'un système électronique de gestion et de stockage de cycle en libre service. Par cycle on entend tout véhicule comprenant au moins une roue, montée pivotante sur une fourche fixée à un guidon et solidaire en rotation d'un cadre ou plateforme. Ainsi à titre non limitatif un cycle peut être une trottinette à deux ou trois roues, un véhicule à deux roues, à moteur ou non ou un tricycle ou triporteur.

### ARRIERE-PLAN TECHNOLOGIQUE DE L'INVENTION

Actuellement, certaines zones urbaines se sont dotées de stations à cycles en libre service afin d'inciter les personnes à éviter de prendre leur automobile, ce qui peut engendrer des problèmes importants liés aux difficultés de déplacements et à une augmentation de la pollution. Ces stations permettent l'emprunt ou le dépôt de cycles sur des bornes d'accès d'une station comme divulgué dans les brevets FR 2 909 119 et FR 2 938 496. Ainsi, les systèmes de stockage de cycles en libre service comprennent au moins une borne ou poste de verrouillage fixe permettant une identification d'un cycle et éventuellement de son utilisateur, le cycle se trouvant verrouillé à un moyen de verrouillage. Ce moyen de verrouillage situé sur la borne de verrouillage fixe met en jeu une glissière de verrouillage destinée à coopérer avec un élément de verrouillage fixé sur le cycle comme décrit dans le brevet FR 2 856 825.

Cependant, un problème dans le domaine des systèmes de stockage de cycle concerne les bornes de verrouillage. Afin d'assurer la résistance aux efforts extérieurs exercés sur la borne de verrouillage, ces bornes sont généralement scellées individuellement à la chaussée pour obtenir une borne de verrouillage fixe et immobile. Les bornes de verrouillage sont alimentées électriquement et connectées, par exemple par le réseau ou une alimentation solaire à un point d'alimentation par des câbles logés dans des gaines enterrées à cotés des longrines en béton. Par exemple, ces bornes de verrouillage sont divulguées dans le brevet FR 2 897 588. Ce type de borne de verrouillage à un coût de mise en place important et un temps de montage et de démontage en maintenance également important. De plus, en début d'installation du système, ces fondations enterrées à côtés des longrines imposent des coûts supplémentaires pour les identifier et pour éventuellement réaliser des déviations ou des contournements d'autres réseaux de services publics (télécom, gaz, câble opérateurs par exemples) pouvant gêner l'installation du système de stockage de cycle. De même lors d'une opération de démontage de l'installation du système, il est nécessaire de restituer les lieux tels qu'ils étaient avant l'installation, ce qui engendre des coûts supplémentaires pour déconstruire des fondations enterrées.

De plus, il est connu de l'art antérieur des bornes de verrouillage en aluminium ou autre matériau moulé. Ce type de borne de verrouillage présente l'inconvénient d'être moulé et coulé pour obtenir une épaisseur importante afin d'assurer une résistance suffisante aux efforts exercés sur la borne. Ainsi, ce type de borne de verrouillage sont très rigides et ne permettent pas de reconfigurer facilement le système au cours de son exploitation, alors que le tissu urbain évolue, les demandes des usagers changent obligeant des réorganisations fréquentes de la topologie du système pour s'adapter au besoin réel des usagers, par exemple de sorte à confronter le trafic réel au trafic escompté dans certains sites, lors de manifestations impliquant des pics d'usages, et enfin au fil du temps en fonction de l'évolution de l'urbanisation de certains quartiers.

Dans ce contexte, il est intéressant de proposer une solution permettant de pallier les inconvénients de l'art antérieur en facilitant l'installation d'au moins un poste de verrouillage pour cycle à un système de gestion électronique et de stockage de cycle.

### DESCRIPTION GENERALE DE L'INVENTION

La présente invention a pour but de pallier un ou plusieurs inconvénients de l'art antérieur en proposant une solution permettant de rendre plus aisée l'installation d'au moins un poste de verrouillage pour cycle à un système de gestion électronique et de stockage de cycle.

A cet effet, la présente invention concerne une installation d'au moins un poste de verrouillage d'un élément de verrouillage fixé sur un cycle à connecter à un système électronique de gestion et de stockage de cycle, le poste de verrouillage comprenant au moins une platine de verrouillage associée à une glissière de verrouillage de sorte à recevoir l'élément de verrouillage fixé sur le cycle, et à un ensemble électronique de sorte à communiquer avec le système électronique de gestion et de stockage des cycles ; et au moins un piétement formant un habillage et un support de ces éléments,
- chaque platine de verrouillage de chaque poste est constituée d'une plaque de fixation interne pourvue d'éléments de réglage de façon à affiner le réglage en hauteur de la glissière de verrouillage,
- le piètement, le support et l'habillage sont des éléments séparés,
- chaque support de piétement comprend au moins un support de sol constitué d'au moins une platine de sol fixée sur au moins deux tubes longitudinaux pour former une structure en forme d'échelle, posées sur le sol,
- le piétement est solidaire de la platine de sol,
- l'habillage est constitué d'au moins un habillage du piètement et du poste de verrouillage et d'au moins un habillage de la structure en forme d'échelle, cet habillage de la structure en forme d'échelle pour servir de surface de roulement des cycles est constitué d'au moins un revêtement comportant au moins une ouverture en vis à vis de chaque piètement et de chaque plaque de fixation.

Selon une autre particularité, le revêtement d'habillage des postes de verrouillages comprend au moins un revêtement de forme tubulaire comportant une première ouverture permettant le passage de la glissière de verrouillage pour protéger l'ensemble électronique et une deuxième ouverture parallèle à l'axe du tube pour permettre le passage du piétement et ce revêtement d'habillage est associé à un moyen de fermeture en forme de bande pourvue de moyens lui permettant de se solidariser de façon démontable sur les ouvertures du revêtement d'habillage du poste de verrouillage.

Selon une variante de réalisation du revêtement d'habillage, la deuxième ouverture de passage du piétement est sur une face opposée de la première ouverture de passage de la glissière de verrouillage.

Selon une autre variante de réalisation du revêtement d'habillage, la deuxième ouverture de passage du piétement est dans le prolongement vertical de la première ouverture de passage de la glissière de verrouillage.

Selon une autre particularité, chaque platine de sol est rendue solidaire d'au moins deux barres de maintien parallèles entre elles et perpendiculaires aux deux tubes longitudinaux de sorte à former un support en forme d'une échelle de largeur plus importante pour en améliorer la stabilité.

Selon une autre particularité, le revêtement du poste de verrouillage est en tôle pliée et soudée ou en matériau de composite ou en plastique.

Selon une autre particularité, l'installation comprend au moins un support de sol et au moins deux postes de verrouillage, permettant de réaliser différentes combinaisons composant une installation.

Par ailleurs, la présente invention a également pour autre objet un procédé d'installation rapide d'au moins un ensemble de postes de verrouillage pour des éléments de verrouillage fixés sur un cycle coopérant avec un système électronique de gestion et de stockage de cycle, l'installation comprenant au moins un revêtement d'habillage du piètement et du poste de verrouillage comportant au moins une ouverture, caractérisé en ce que le poste de verrouillage est composé d'une platine de verrouillage constituée d'une glissière de verrouillage et d'un ensemble électronique ; et un piétement solidaire de la platine de verrouillage, l'installation comprend :
- au moins un support de sol constitué d'au moins une platine de sol fixée sur au moins deux barres de maintien parallèles entre elles et perpendiculaires à au moins deux tubes longitudinaux de sorte à former un support en forme d'une échelle,
- au moins un revêtement d'habillage de la structure en forme d'échelle comportant à des intervalles correspondant à la distance entre chaque piétement au moins une ouverture, pour couvrir la structure de sol,
le procédé d'installation consistant à
- poser à même le sol au moins un élément de piétement monté sur le support de sol ;
- installer le revêtement d'habillage de la structure en forme d'échelle sur le support de sol, en plaçant les ouvertures du revêtement en vis à vis des piétements et des plaques de fixation des postes de verrouillage ;
- monter les postes de verrouillages sur les platines et les relier aux câblages passant dans ou le long des tubes longitudinaux et dans ou le long des piètements ;
- installer le revêtement d'habillage du piètement du poste de verrouillage autour de la platine de verrouillage et du piétement de sorte que la glissière de verrouillage passe par une première ouverture du revêtement ;
- relier les câblages de l'ensemble de piétements au système électronique de gestion et de commande des postes de verrouillages.

Selon une autre variante de réalisation, le procédé d'installation rapide d'au moins un ensemble de postes de verrouillage pour des éléments de verrouillage fixés sur un cycle coopérant avec un système électronique de gestion et de stockage de cycle, l'installation comprenant au moins un revêtement d'habillage du piètement et du poste de verrouillage comportant au moins une ouverture, caractérisé en ce que le poste de verrouillage est composé d'une platine de verrouillage constituée d'une glissière de verrouillage et d'un ensemble électronique ; et un piétement solidaire de la platine de verrouillage ; l'installation comprend
- au moins un support de sol constitué d'au moins une platine de sol fixée sur au moins deux barres de maintien parallèles entre elles et perpendiculaires à au moins deux tubes longitudinaux de sorte à former un support en forme d'une échelle ;
- au moins un revêtement d'habillage de la structure en forme d'échelle comportant à des intervalles correspondant à la distance entre chaque piétement au moins une ouverture pour couvrir la structure de sol ;
le procédé d'installation consistant à
- fixer le support de sol sur le revêtement d'habillage de la structure en forme d'échelle en plaçant les ouvertures du revêtement en vis-à-vis des platines de sol ;
- fixer les piétements sur les platines de sol du support de sol ;
- monter les postes de verrouillages sur les platines et les relier aux câblages passant dans ou le long des tubes longitudinaux et dans ou le long des piètements ;
- installer le revêtement d'habillage du piètement et du poste de verrouillage autour de la platine de verrouillage et du piétement de sorte que la glissière de verrouillage passe par la première ouverture du revêtement ;
- relier les câblages de l'ensemble de piétements au système électronique de gestion et de commande des postes de verrouillages.

D'autres particularités et avantage de la présente invention sont détaillés dans la description qui suit.

### DESCRIPTION DES FIGURES ILLUSTRATIVES

D'autres particularités et avantages de la présente invention apparaîtront plus clairement à la lecture de la description ci-après, faite en référence aux dessins annexés, dans lesquels :
- la figure 1 représente une vue en perspective d'une installation de cinq postes de verrouillage d'un système électronique de gestion et de stockage de cycle, avant l'assemblage du revêtement d'habillage de la structure en forme d'échelle sur l'ensemble des postes de verrouillage.
- la figure 2 représente une vue en perspective de l'installation de cinq postes de verrouillage, après l'assemblage d'un revêtement d'habillage de la structure en forme d'échelle.
- la figure 3 représente une vue en perspective avant d'une partie de l'installation comprenant un des postes de verrouillage assemblé avec un revêtement d'habillage d'un poste de verrouillage.
- la figue 4a représente une vue en perspective arrière d'une partie de l'installation comprenant un des postes de verrouillage assemblé avec un revêtement d'habillage d'un poste de verrouillage selon un mode de réalisation.
- la figure 4b représente une vue en perspective avant d'une partie de l'installation comprenant un des postes de verrouillage assemblé avec un revêtement d'habillage d'un poste de verrouillage selon un autre mode de réalisation.
- la figure 5 représente une vue en perspective d'un poste de verrouillage fixé à une platine de sol.
- la figure 6a représente une vue en perspective du revêtement d'habillage d'un poste de verrouillage selon le mode de réalisation de la figure 4a.
- la figure 6b représente une vue en perspective du revêtement d'habillage d'un poste de verrouillage selon l'autre mode de réalisation de la figure 4b.

Sur les différentes figures, les mêmes références désignent des éléments identiques ou similaires.

### DESCRIPTION DES MODES DE REALISATION PREFERES DE L'INVENTION

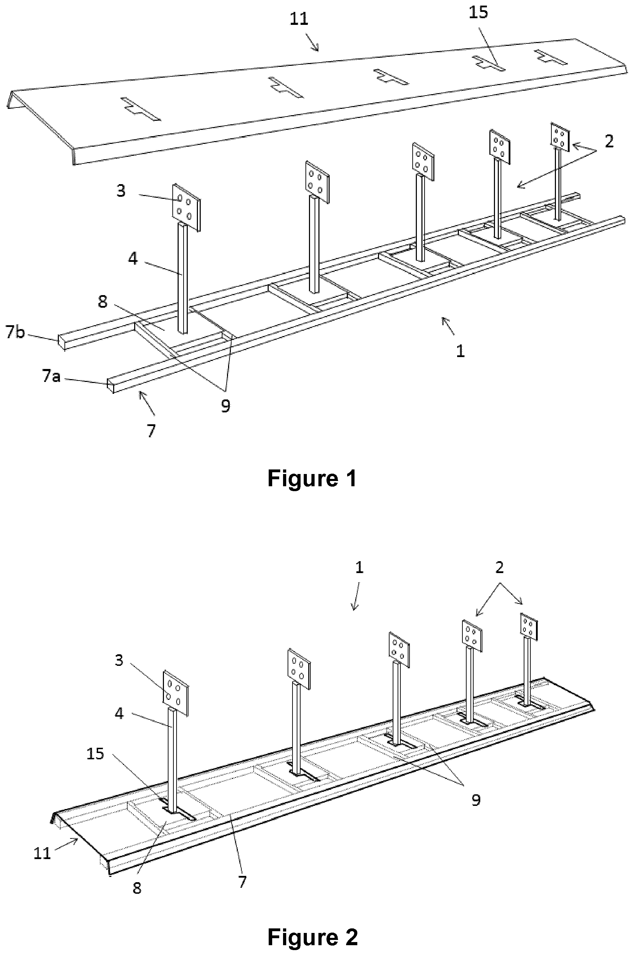

En référence aux figures 1 à 6, va être maintenant décrite.

La présente invention concerne une installation d'au moins un poste de verrouillage, d'un élément de verrouillage fixé sur un cycle, à connecter à un système électronique de gestion et de stockage de cycle.

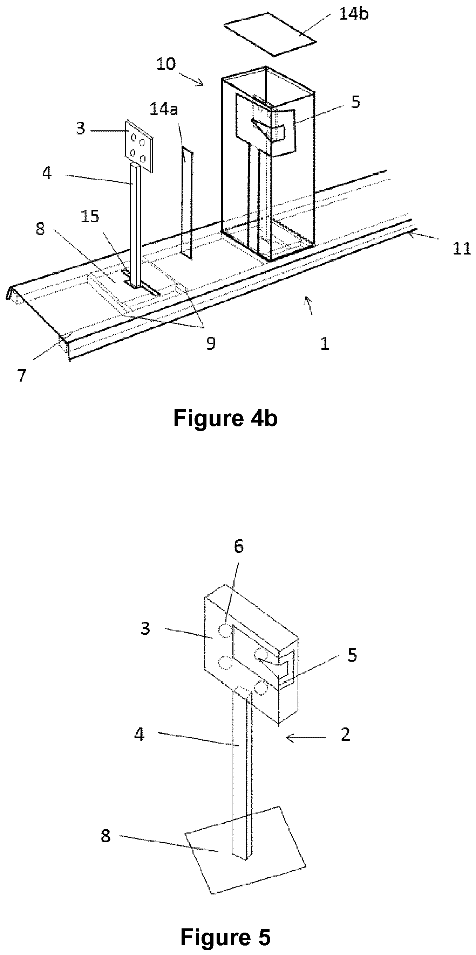

Dans certains modes de réalisation, le poste de verrouillage (2) de l'installation (1) est constitué d'une platine de verrouillage (3) et d'un piétement (4) formant un habillage (10, 11) et un support (7) à la platine de verrouillage (3), tel que représenté sur la figure 5.

Dans certains modes de réalisation, la platine de verrouillage (3), telle que représenté sur la figure 5, est composée d'une glissière de verrouillage (5) destiné à coopérer avec l'élément de verrouillage fixé sur le cycle de sorte à verrouiller ou déverrouiller le cycle sur le poste de verrouillage (2). Ainsi, la glissière de verrouillage (5) est adaptée pour recevoir l'élément de verrouillage fixé sur un cycle et de retenir le élément de verrouillage lorsqu'il atteint une position de verrouillage.

Dans certains modes de réalisation, la platine de verrouillage (3) est composée également d'un ensemble électronique, non représenté sur les figures, permettant de communiquer avec le système électronique de gestion et de stockage du cycle.

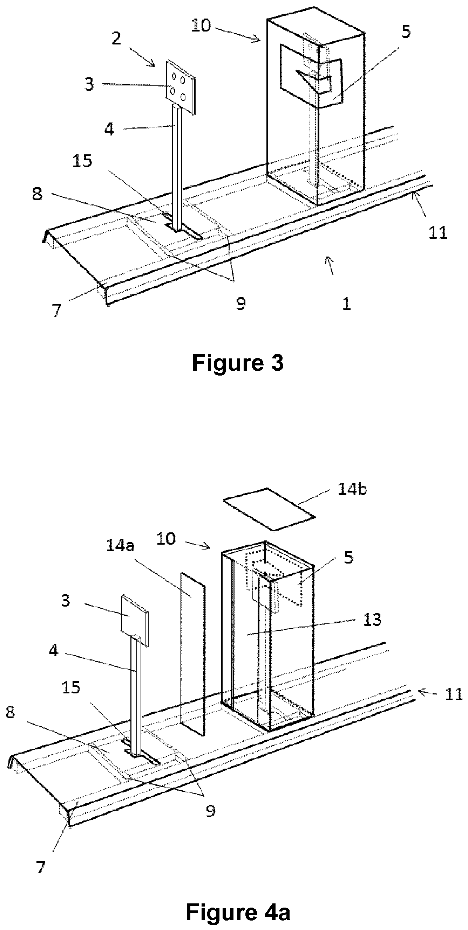

Dans certains modes de réalisation, chaque platine de verrouillage (3) comprend une plaque de fixation interne (6) pourvue d'éléments de réglage de façon à affiner le réglage en hauteur de la glissière de verrouillage (5), avec des trous oblongs par exemple, de sorte que la glissière de verrouillage (5) passe à travers une première ouverture (12) d'un revêtement d'habillage du poste de verrouillage (10). Ledit revêtement d'habillage (10) peut également revêtir et verrouiller le piètement (4), par exemple comme représenté sur les figures 4a, 4b et 5. La plaque de fixation interne permet de prendre en compte les dénivelées indésirables du sol et permettre de verrouiller la glissière de verrouillage dans la première ouverture sans aucun jeu d'espace. Selon un mode de réalisation de l'invention, par coulissement vertical de la plaque de fixation interne (6), la glissière de verrouillage (5) est réglée à la même hauteur que la première ouverture (12) du revêtement d'habillage du poste de verrouillage (10).

Dans l'art antérieur les piétements, d'une installation connectée à un système électronique de gestion et de stockage de cycle, forment un habillage et un support de la platine de verrouillage. Dans certains modes de réalisation de la présente invention, le piétement (4) de l'installation (1), le support (7) de l'installation (1) et l'habillage (10, 11) de l'installation (1) sont des éléments séparés; en ce que le piétement et le support assurent la stabilité de l'installation et la résistance aux efforts mécaniques exercés sur l'installation ; alors que l'habillage a un rôle de revêtement et de protection externe des éléments constituant l'installation (1). Ainsi, l'habillage ne remplit plus le rôle de support des éléments constituants l'installation (1) comme dans l'art antérieur. En effet, le piètement de l'art antérieur représente à la fois un habillage et un support des éléments (c'est-à-dire du poste de verrouillage, du support de sol et de l'habillage du poste de l'installation) constituants l'installation.

Dans certains modes de réalisation, chaque support de piétement (4), tel que représenté sur les figures 1 à 4, comprend au moins un support de sol (7) constitué d'au moins une platine de sol (8) fixée sur au moins deux tubes longitudinaux (7a, 7b) pour former une structure en forme d'échelle, posées sur le sol.

Dans certains modes de réalisation, chaque platine de sol (8) est rendue solidaire d'au moins deux barres de maintien (9) parallèles entre elles et perpendiculaires aux deux tubes longitudinaux (7a, 7b) de sorte à former un support en forme d'une échelle de largeur plus importante pour en améliorer la stabilité. Dans ce mode de réalisation, le support de sol (7) est un ensemble composé de deux éléments longitudinaux (7a, 7b), reliés entre eux par au moins deux barres transversales (9) fixées à intervalles réguliers ou irréguliers des éléments longitudinaux (7a, 7b), et de la platine de sol (8) fixée sur les barres (9). Les barres de maintien (9) sont parallèles entre elles de sorte à former un support de sol (7) de la forme d'une échelle. De manière non-limitative, les barres de maintien (9) peuvent être positionnées d'une autre façon que le mode de réalisation de sorte que la platine de sol (8) soit fixée de façon stable et immobile sur les barres de maintien. Le support de sol présente l'avantage d'être un support de maintien stable sur lequel les postes de verrouillage sont fixés. Ainsi, le support de sol permet d'éviter de fixer les postes de verrouillage directement sur le sol de la voie publique. De plus, ce type de mode de réalisation présente l'avantage de réaliser un support de sol, destiné à un système électronique de gestion et de stockage de cycle, directement en usine et prêt à être installer sur la voie publique. Le support de sol est installé ou désinstallé facilement sur la voie publique sans dégradation du sol. En outre, le support de sol de la présente invention présente l'avantage de désinstaller le support de sol et le replacer rapidement dans un autre endroit.

Dans certains modes de réalisation, le piétement (4) est fixé sur la platine de sol (8) du support de sol (7). Le piétement solidaire de la platine de sol permet de stabiliser le poste de verrouillage sur le support de sol de sorte à assurer la résistance aux efforts mécaniques exercés sur le poste de verrouillage.

Dans certains modes de réalisation, l'habillage est constitué d'au moins un habillage du poste de verrouillage (10) et d'au moins un habillage de la structure en forme d'échelle (11). L'habillage de la structure en forme d'échelle (11) permet de stabiliser et protéger le support de sol (7). L'habillage du poste de verrouillage (10) permet de verrouiller et protéger le piètement (4) et les éléments composant le poste de verrouillage. Ainsi, l'habillage du poste de verrouillage (10) ne remplit plus la fonction de support, il forme un revêtement esthétique et fermé protégeant la platine de verrouillage (3) des intempéries de la pluie, des poussières, contre les vandalismes léger ou les tentatives de manipulation des mécanismes.

Dans certains modes de réalisation, l'habillage de la structure en forme d'échelle (11), pour servir de surface de roulement des cycles, est constitué d'au moins un revêtement (10) comportant au moins une ouverture (15) en vis à vis de chaque piètement (4) et de chaque plaque de fixation (6).

Dans certains modes de réalisation, le revêtement d'habillage (10) des piétements (4) et des postes de verrouillages (3) comprend au moins un revêtement de forme tubulaire comportant une première ouverture (12) permettant le passage de la glissière de verrouillage (4) pour protéger l'ensemble électronique et une deuxième ouverture (13) parallèle à l'axe du tube pour permettre le passage du piétement (4) et ce revêtement d'habillage est associé à au moins un moyen de fermeture (14, 14a, 14b) en forme de bande pourvue de moyens lui permettant de se solidariser de façon démontable sur les ouvertures (12, 13) du revêtement d'habillage (10) du poste de verrouillage (2). La forme tubulaire permet d'introduire et de retirer facilement, notamment par un simple mouvement de glissement, le revêtement d'habillage autour du piétement. Cette forme avantageuse du revêtement d'habillage permet d'accéder facilement, sans manipulation complexe et avec de simples outils, aux composants électroniques et aux mécanismes solidaires du piétement pour réaliser des opérations de maintenance. Le revêtement d'habillage ne remplissant plus le rôle de support et de résistance aux efforts appliqués sur le poste de verrouillage, mais il réalise une fonction esthétique et une fonction de protection de la platine de verrouillage et du piétement permettant de faciliter ainsi, d'une part, une introduction/un retrait du revêtement d'habillage autour du piétement, et d'autre part, un accès rapide pour les opérations de maintenance. Le revêtement d'habillage de ce mode de réalisation, présente un gain de temps et de coût lors de l'installation du système et lors des opérations de maintenance/démontage de l'installation.

Dans certains modes de réalisation, la première ouverture (12) est de la même forme et sensiblement de la même dimension que la glissière de verrouillage (5) de sorte à faciliter le passage de la glissière de verrouillage (5) à travers la première ouverture (12). Ainsi, le revêtement du poste de verrouillage (10) s'insère facilement autour de la platine de verrouillage (3) en passant par la première ouverture de passage de la glissière (12), comme représenté sur les figures 4a et 4b. La deuxième ouverture (13) du revêtement du poste de verrouillage (10) est de la même forme et au moins de la même dimension que le piétement (4) de sorte à faciliter le passage du piétement (4) à travers cette deuxième ouverture (13). Ainsi, le revêtement du poste de verrouillage (10) s'insère facilement autour du piétement (4) en passant par la deuxième ouverture de passage du piétement (13), comme représenté sur les figures 4a et 4b. La deuxième ouverture du revêtement du poste de verrouillage présente l'avantage de faciliter l'accès à la platine de verrouillage lors du montage/démontage et lors de la maintenance du poste verrouillage. Le moyen de fermeture (14) peut être composé d'une trappe (14a) pour fermer la deuxième ouverture (13) et un couvercle (14b) qui est posé sur le revêtement (10) de sorte à solidariser de façon démontable le poste de verrouillage (2).

Dans certains modes de réalisation, la première ouverture (12) du revêtement de verrouillage (10) est de la même forme et d'une dimension plus grande que la glissière de verrouillage (5) de sorte que la glissière passe facilement à travers cette première ouverture. Dans ce mode de réalisation, la glissière de verrouillage (5) comprend des prolongements latéraux ou des ailes permettant de recouvrir l'espace vide entre la première ouverture (12) du revêtement d'habillage (10) et la platine de verrouillage (3). Ainsi, une dimension de la première ouverture plus grande que la dimension de la glissière de verrouillage permet un coulissement vertical, de plus ou moins 1 cm, de la glissière par rapport à une position médiane permettant de prendre en compte les dénivelées indésirables du sol.

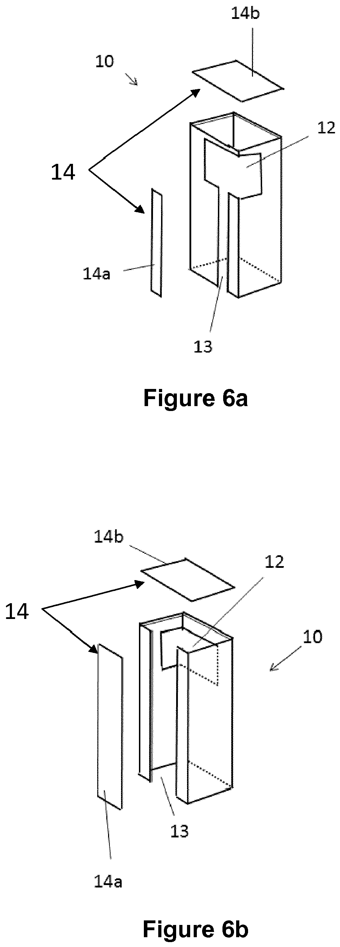

Selon une variante de réalisation du revêtement d'habillage du poste de verrouillage, la deuxième ouverture (13) de passage du piétement (4), tel que représenté sur la figure 6a, est sur une face opposée de la première ouverture (12) de passage de la glissière de verrouillage (5). Comme on peut le voir sur la figure 4a, le revêtement de poste de verrouillage (10) est monté autour de la platine de verrouillage (3) et du piétement (4) en passant par la deuxième ouverture (13), ce qui facilite le passage de la glissière de verrouillage (5) autour de la première ouverture (12) du revêtement (10).

Selon une autre variante de réalisation du revêtement d'habillage du poste de verrouillage, la deuxième ouverture (13) de passage du piétement (4), tel que représenté sur la figure 6b, est dans un prolongement vertical de la première ouverture (12) de passage de la glissière de verrouillage (5). Selon une variante de ce mode de réalisation et non-limitativement, la première ouverture (12) et la deuxième ouverture (13) forment une ouverture en forme de T sur une des faces du revêtement du poste de verrouillage (10). Comme on peut le voir sur la figure 4b, le revêtement du poste de verrouillage (10) est monté autour de la platine de verrouillage (3) et du piétement (4) en passant par la première ouverture (12) et la deuxième ouverture (13), ce qui facilite également le passage de la glissière de verrouillage (5) autour de la première ouverture (12) du revêtement (10).

Dans un certains modes de réalisation, le revêtement d'habillage du poste de verrouillage (10) est réalisé en tôle pliée et soudée de sorte à alléger l'encombrement des postes de verrouillage (2) et réduire le temps et le coût de montage et de maintenance de l'installation (1). De même, le revêtement du poste de verrouillage (10), qui n'a pas de rôle de résistance aux contraintes mécaniques exercées sur le poste de verrouillage, peut être réalisé par exemple en matériaux de composite ou en plastiques moulés, projetés, pressés ou emboutis.

Dans certains modes de réalisation, l'installation (1) comprend au moins un support de sol (7) et cinq postes de verrouillage (2), comme représenté sur les figures 1 et 2. Ainsi, de manière préférentielle cinq postes de verrouillage (2) peuvent être fixés sur un support de sol (7) constitué de cinq platines de sol (9). Suivant le nombre de poste de verrouillage voulu et l'espace mise à disposition sur la voie publique, l'installation peut également être constituée de deux supports de sol (7) ou plus et dix postes de verrouillage (2) ou plus. L'installation de l'invention présente l'avantage de comprendre un support de sol (7) mobile qui peut être déplacé facilement et rapidement d'un endroit à un autre.

La présente invention concerne également un procédé d'installation d'au moins un ensemble de postes de verrouillage (2) pour des éléments de verrouillage fixés sur un cycle coopérant avec un système électronique de gestion et de stockage des cycles, l'installation comprenant
- le poste de verrouillage (2) comportant une platine de verrouillage (3) constituée d'une glissière de verrouillage (5) et d'un ensemble électronique ; et un piétement (4) solidaire de la platine de verrouillage (3),
- au moins un support de sol (7) constitué d'au moins une platine de sol (8) fixée sur au moins deux barres de maintien (9) parallèles entre elles et perpendiculaires à au moins deux tubes longitudinaux(7a, 7b) de sorte à former un support en forme d'une échelle,
- au moins un revêtement d'habillage (11) de la structure en forme d'échelle comportant à des intervalles correspondant à la distance entre chaque piétement au moins une ouverture (15), pour couvrir la structure de sol (7),
- au moins un revêtement d'habillage (10) du poste de verrouillage (2) comportant au moins une ouverture (12, 13),
le procédé d'installation consistant à
- poser à même le sol au moins un élément de piétement (4) monté sur un support de sol (7);
- installer le revêtement d'habillage (11) de la structure en forme d'échelle sol sur le support de sol (7), en plaçant les ouvertures (15) du revêtement (11) en vis à vis des piétements (4) et des plaques de fixation (6) des postes de verrouillage (2);
- monter les postes de verrouillages (2) sur les platines (8) et les relier aux câblages passant dans ou le long des tubes longitudinaux (7a, 7b) et dans ou le long des piètements (4);
- installer le revêtement d'habillage(10) du poste de verrouillage (2) autour de la platine de verrouillage (3) et du piétement (4) en passant par l'ouverture (12, 13) du revêtement (10);
- relier les câblages de l'ensemble de piètements (4) au système électronique de gestion et de commande des postes de verrouillages (2).

Selon une variante de réalisation, le procédé d'installation d'au moins un ensemble de postes de verrouillage (2) pour des éléments de verrouillage fixés sur un cycle coopérant avec un système électronique de gestion et de stockage de cycle, l'installation (1) comprenant :
- le poste de verrouillage (2) composé d'une platine de verrouillage (3) constituée d'une glissière de verrouillage (5) et d'un ensemble électronique ; et un piétement (4) solidaire de la platine de verrouillage (3),
- au moins un support de sol (7) constitué d'au moins une platine de sol (8) fixée sur au moins deux barres de maintien (9) parallèles entre elles et perpendiculaires à au moins deux tubes longitudinaux de sorte à former un support (7) en forme d'une échelle,
- au moins un revêtement d'habillage de la structure en forme d'échelle (11) comportant à des intervalles correspondant à la distance entre chaque piétement (4) au moins une ouverture (15), pour couvrir la structure de sol (7),
- au moins un revêtement d'habillage du poste de verrouillage (10) comportant au moins une ouverture (12, 13),
le procédé d'installation consistant à
- fixer le support de sol (7) sur le revêtement d'habillage de la structure en forme d'échelle (11), en plaçant les ouvertures (15) du revêtement (11) en vis-à-vis des platines de sol (8),
- fixer les piétements (4) sur les platines de sol (8) du support de sol (7),
- monter les postes de verrouillages (2) sur les platines (3) et les relier aux câblages passant dans ou le long des tubes longitudinaux et dans ou le long des piètements (4) ;
- installer le revêtement d'habillage du poste de verrouillage (10) autour de la platine de verrouillage (3) et du piétement (4) de sorte que la glissière de verrouillage (4) passe par la première ouverture du revêtement (12) ;
- relier les câblages de l'ensemble de piètements (4) au système électronique de gestion et de commande des postes de verrouillages (2).

Ainsi, les deux variantes du procédé de montage de la présente invention permettent de gagner en temps et en coût de montage/démontage de l'installation et également lors des opérations de maintenance à effectuer sur les postes de verrouillage.

Ces procédés de montage permettent de dissocier la fabrication de l'habillage qui assure essentiellement une fonction de revêtement de protection et esthétique par rapport au reste des organes qui assurent une fonction technique dans l'installation, l'habillage est ainsi changé fréquemment, en fonction de modes, de mises à jour du système, de nouvelles formes demandées par les usagers, sans remettre en cause, la fonction technique du poste de verrouillage, qui est intégralement assurée par le piétement et les organes qui lui sont rattachés.

En effet, les procédés de montage permettent de réaliser directement en usine l'installation, notamment de tous les organes fonctionnels, comprenant le poste de verrouillage fixé sur le support de sol et l'ensemble assemblé par le revêtement d'habillage de la structure en forme d'échelle et les revêtements d'habillage du poste de verrouillage, et donc prête à être installer sur la voie publique.

De même, le poste d'habillage peut être aisément changé sur la voie publique, avec un système déjà présent et en exploitation

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Installation (1) d'au moins un poste de verrouillage (2) d'un élément de verrouillage fixé sur un cycle à connecter à un système électronique de gestion et de stockage de cycle, le poste de verrouillage (2) comprenant au moins une platine de verrouillage (3) associée à une glissière de verrouillage (5) de sorte à recevoir l'élément de verrouillage fixé sur le cycle, et à un ensemble électronique de sorte à communiquer avec le système électronique de gestion et de stockage des cycles ; et au moins un piétement (4) formant un habillage (10, 11) et un support (7) de ces éléments, **caractérisée en ce que**
- chaque platine de verrouillage (3) de chaque poste (3) est constituée d'une plaque de fixation (6) interne pourvue d'éléments de réglage de façon à affiner le réglage en hauteur de la glissière de verrouillage (5),
- le piètement (4), le support (7) et l'habillage (10, 11) sont des éléments séparés,
- chaque support de piétement (4) comprend au moins un support de sol (7) constitué d'au moins une platine de sol (8) fixée sur au moins deux tubes longitudinaux pour former une structure en forme d'échelle, posées sur le sol,
- le piétement (4) est solidaire de la platine de sol (8),
- l'habillage est constitué d'au moins un habillage du piètement et du poste de verrouillage (10); et d'au moins un habillage de la structure en forme d'échelle (11), cet habillage de la structure en forme d'échelle (11) pour servir de surface de roulement des cycles est constitué d'au moins un revêtement (11) comportant au moins une ouverture (15) en vis à vis de chaque piètement (4) et de chaque plaque de fixation (6).

2. Installation selon la revendication 1, **caractérisée en ce que** l'habillage des piètements et des postes de verrouillages (10) comprend au moins un revêtement (10) de forme tubulaire comportant une première ouverture (12) permettant le passage de la glissière de verrouillage (5) pour protéger l'ensemble électronique et une deuxième ouverture (13) parallèle à l'axe du tube pour permettre le passage du piétement (4) et ce revêtement d'habillage (10) est associé à un moyen de fermeture (14a, 14b) en forme de bande pourvue de moyens lui permettant de se solidariser de façon démontable sur les ouvertures du revêtement d'habillage (10) du piètement et du poste de verrouillage (2).

3. Installation selon la revendication 2, **caractérisée en ce que** la deuxième ouverture (13), de passage du piétement (4) du revêtement d'habillage des piétements-et des postes de verrouillages, est sur une face opposée de la première ouverture (12) de passage de la glissière de verrouillage (5).

4. Installation selon la revendication 2, **caractérisée en ce que** la deuxième ouverture (13), de passage du piétement (4) du revêtement d'habillage des piétements et des postes de verrouillages, est sur un prolongement vertical de la première ouverture (12) de passage de la glissière de verrouillage (5).

5. Installation selon l'une des revendications 1 à 4, **caractérisée en ce que** chaque platine de sol (8) est rendue solidaire à au moins deux barres de maintien (9) parallèles entre elles et perpendiculaires au deux tubes longitudinaux de sorte à former un support (7) en forme d'une échelle de largeur plus importante pour en améliorer la stabilité.

6. Installation selon l'une des revendications 2 à 5, **caractérisée en ce que** le revêtement du poste de verrouillage (10) est en tôle pliée et soudée ou en matériaux de composite ou en plastique.

7. Installation selon l'une des revendications 1 à 6, **caractérisée en ce que** l'installation (1) comprend au moins un support de sol (7) et au moins deux postes de verrouillage (2).

8. Procédé d'installation d'au moins un ensemble de postes de verrouillage (2) pour des éléments de verrouillage fixés sur un cycle coopérant avec un système électronique de gestion et de stockage de cycle, selon l'une des revendications 1 à 7, **caractérisé en ce que** ledit procédé d'installation consistant à
- poser à même le sol au moins un piétement (4) monté sur un support de sol (7) ;
- installer le revêtement d'habillage de la structure en forme d'échelle (11) sur le support de sol (7), en plaçant les ouvertures (15) du revêtement (11) en vis à vis des piétements (4) et des plaques de fixation (6) des postes de verrouillage (2) ;
- monter les postes de verrouillages (2) sur les platines (3) et les relier aux câblages passant dans ou le long des tubes longitudinaux et dans ou le long des piètements (4) ;
- installer le revêtement d'habillage du piètement et du poste de verrouillage (10) autour de la platine de verrouillage (3) et du piétement (4) de sorte que la glissière de verrouillage (4) passe par la première ouverture du revêtement (12) ;
- relier les câblages de l'ensemble de piètements (4) au système électronique de gestion et de commande des postes de verrouillages (2).

9. Procédé d'installation d'au moins un ensemble de postes de verrouillage (2) pour des éléments de verrouillage fixés sur un cycle coopérant avec un système électronique de gestion et de stockage de cycle, selon l'une des revendications 1 à 7, **caractérisé en ce que** le procédé d'installation consistant à
- fixer le support de sol (7) sur le revêtement d'habillage de la structure en forme d'échelle (11), en plaçant les ouvertures (15) du revêtement (11) en vis-à-vis des platines de sol (8),
- fixer les piétements (4) sur les platines de sol (8) du support de sol (7),
- monter les postes de verrouillages (2) sur les platines (3) et les relier aux câblages passant dans ou le long des tubes longitudinaux et dans ou le long des piètements (4) ;
- installer le revêtement d'habillage du piètement et du poste de verrouillage (10) autour de la platine de verrouillage (3) et du piétement (4) de sorte que la glissière de verrouillage (4) passe par la première ouverture du revêtement (12) ;
- relier les câblages de l'ensemble de piètements (4) au système électronique de gestion et de commande des postes de verrouillages (2).
